# EUROPEAN PATENT SPECIFICATION

(11) **EP 2 944 885 B1**
(45) Date of publication and mention of the grant of the patent: **01.05.2019**
(21) Application number: 15167504.8
(22) Date of filing: 13.05.2015
(51) Int. Cl.: F24D 17/00, C02F 5/04, F24D 17/02, F24D 19/00

(54) **HOT WATER SUPPLY APPARATUS**
VORRICHTUNG ZUR ABGABE VON HEISSEM WASSER
APPAREIL D'ALIMENTATION D'EAU CHAUDE

(30) Priority: 15.05.2014 JP 2014101033
(43) Date of publication of application: 18.11.2015
(73) Proprietor: Panasonic Intellectual Property Management Co., Ltd., Osaka-shi, Osaka 540-6207 (JP)
(72) Inventor: KUSAKA,, Michiyoshi, Osaka-shi,, Osaka 540-6207 (JP); YAMAOKA,, Yuuki, Osaka-shi,, Osaka 540-6207 (JP)
(74) Representative: Eisenführ Speiser

(56) References cited:
- WO-A1-02/066384
- JP-A- 2004 257 583
- JP-A- 2011 127 825
- JP-A- 2013 130 356

## Description

### BACKGROUND OF THE INVENTION

### 1. Field of the Invention

The present invention relates to hot water supply apparatuses.

### 2. Background Art

There have been hot water supply apparatuses for storing hot water heated by a heater in a hot water storage tank and using stored hot water. (e.g., PTL1 Japanese Patent Unexamined Publication No. 2011-69572).

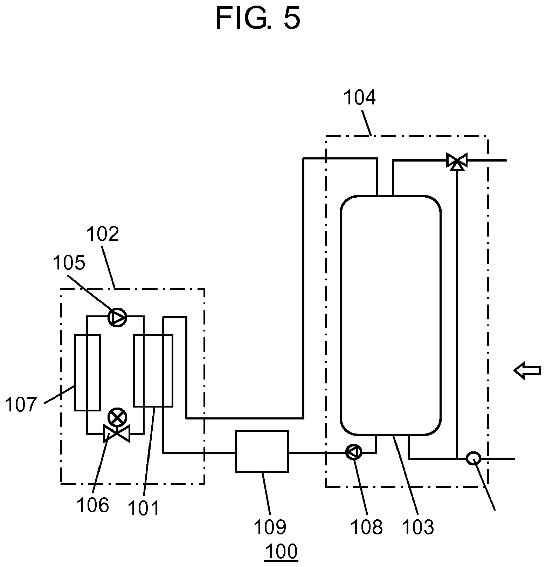

Fig. 5 is a configuration of a conventional hot water supply apparatus disclosed in PTL1.

As shown in Fig. 5, hot water supply apparatus 100 includes heat pump unit 102 with gas cooler 101 (hot-water supply heat exchanger) and hot water storage unit 104 with hot water storage tank 103 for storing water and generated hot water.

In heat pump unit 102, compressor 105, gas cooler 101, expansion valve (pressure reducer) 106, and evaporator 107 are circularly connected by a refrigerant pipe. A lower part of hot water storage tank 103, circulating pump 108, gas cooler 101, and an upper part of hot water storage tank 103 are connected by pipes, respectively, to form a water circuit.

Hot water supply apparatus 100 in PTL1 further includes water quality regulator (adding device) 109 for supplying an inhibitor that suppresses generation of scale to the water circuit between the lower part of hot water storage tank 103 and gas cooler 101.

If the heating operation of hot water supply apparatus 100 is stopped for a long period, a temperature of hot water retained in the water circuit decreases, due to heat release, and this water may freeze under a condition that an ambient temperature is low. In particular, water quality regulator 109 is often made by molding resin, and thus has rigidity lower than water pipes generally made of copper. Eventually, water quality regulator 109 may get damaged if distortion due to volume expansion caused by frozen water is repeatedly applied.

PTL2 - Japanese Patent Publication No. 2013-130356 - discloses a hot water supply. Said document discloses a hot water supply apparatus comprising: a hot water storage tank for storing hot water; a water supply pipe for supplying water to a lower part of the hot water storage tank; an inflow pipe line for feeding the water from the lower part of the hot water storage tank; a heating device for heating the water fed through the inflow pipe line; a hot water outflow pipe line for feeding hot water heated by the heating device to an upper part of the hot water storage tank; a water quality regulator disposed in the water supply pipe for reforming a water quality of inflow water so as to inhibit generation of scale; and an auxiliary heater provided at an upstream side of the water quality regulator for heating water entering the water quality regulator.

### SUMMARY OF THE INVENTION

The present invention offers a hot water supply apparatus that prevents freezing of water inside a water quality regulator and improves maintenance capability thereof.

The hot water supply apparatus as defined in claim 1 includes, amongst others, a hot water storage tank for storing hot water, a water supply pipe for supplying water to a lower part of the hot water storage tank, an inflow pipe line for feeding water from the lower part of the hot water storage tank, a heating device for heating water fed through the inflow pipe line, and a hot water outflow pipe line for feeding hot water heated by the heating device to an upper
part of the hot water storage tank. The hot water supply apparatus further includes a water quality regulator disposed in at least the inflow pipe line or the water supply pipe, and an auxiliary heater provided at the upstream side of the water quality regulator. The water quality regulator adjusts quality of inflow water to that inhibiting generation of scale. The auxiliary heater heats inflow water to the water quality regulator.

This configuration enables to heat inflow water to the water quality regulator by the auxiliary heater. Accordingly, the hot water supply apparatus can prevent freezing of water in the water quality regulator.

### BRIEF DESCRIPTION OF THE DRAWINGS

Fig. 1 is a schematic diagram of a hot water supply apparatus in accordance with a first exemplary embodiment of the present invention.
Fig. 2 is a schematic diagram of a water quality regulating unit of the hot water supply apparatus in accordance with the first exemplary embodiment of the present invention.
Fig. 3 is a schematic diagram of a hot water supply apparatus in accordance with a second exemplary embodiment of the present invention.
Fig. 4 is a schematic diagram of a water quality regulating unit of the hot water supply apparatus in accordance with the second exemplary embodiment of the present invention.
Fig. 5 is a diagram of a conventional hot water supply apparatus disclosed in PTL1.

### DETAILED DESCRIPTION OF PREFERRED EMBODIMENTS

Exemplary embodiments of the present invention are described below with reference to drawings. It is apparent that the scope of the present invention is not limited in any way by these exemplary embodiments.

### (FIRST EXEMPLARY EMBODIMENT)

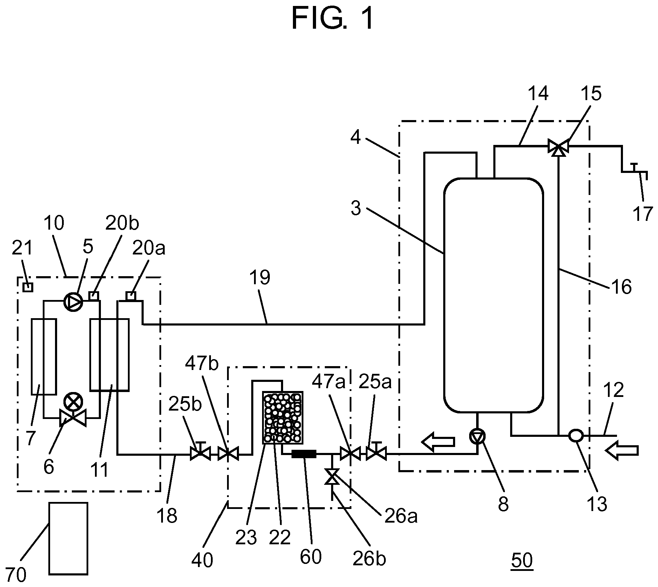

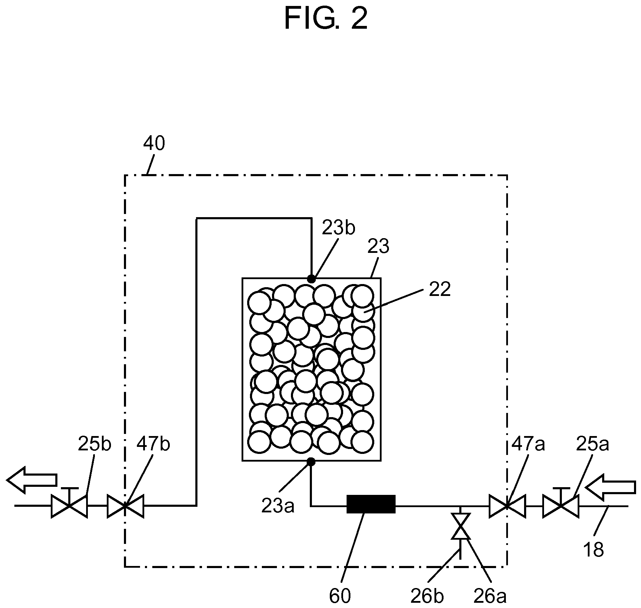

Fig. 1 is a schematic diagram of hot water supply apparatus 50 in the first exemplary embodiment of the present invention. Fig. 2 is a schematic diagram of water quality regulating unit 40 of hot water supply apparatus 50.

As shown in Fig. 1, hot water supply apparatus 50 in this exemplary embodiment includes heating device 10, hot water storage unit 4, and water quality regulating unit 40.

Heating device 10 is a heat pump unit in which compressor 5 for compressing refrigerant, heat exchanger 11 for exchanging heat between the refrigerant and water, pressure reducer (expansion valve) 6 for reducing pressure of the refrigerant, and evaporator 7 for exchanging heat between air and the refrigerant are circularly connected by a refrigerant pipe. Carbon dioxide circulates inside the refrigerant pipe as the refrigerant. By using carbon dioxide as the refrigerant, a pressure of the heat pump unit at the high-pressure side exceeds a critical pressure. Therefore, water is heated to a high temperature (e.g., 85 degrees Celsius) in heat exchanger 11.

Hot water storage unit 4 includes hot water storage tank 3 for storing water. Water supply pipe 12 is connected to a lower part of hot water storage tank 3. Pressure-reducing valve 13 is disposed on water supply pipe 12. A pressure of water supplied from a water pipe is reduced as it passes through pressure-reducing valve 13, and then the water enters the lower part of hot water storage tank 3. Hot water supply pipe 14 is connected to an upper part of hot water supply tank 3. Hot water stored inside hot water storage tank 3 is supplied to hot water supply terminal 17, such as a faucet, shower head, and bath tub, through hot water supply pipe 14.

Hot water storage unit 4 includes bypass pipe 16 connected to hot water supply pipe 14. Bypass pipe 16 branches from water supply pipe 12 at the downstream side of pressure-reducing valve 13. Mixing valve 15 is disposed between hot water supply pipe 14 and bypass pipe 16. At this mixing valve 15, hot water running to hot water supply pipe 14 from the upper part of hot water storage tank 3 is mixed with water running in bypass pipe 16 to adjust a temperature of the hot water. Then, this temperature-adjusted hot water is supplied to hot water supply terminal 17 through hot water supply pipe 14.

The lower part of hot water storage tank 3 and heat exchanger 11 are mutually connected by inflow pipe line 18. Heat exchanger 11 and the upper part of hot water storage tank 3 are mutually connected by hot water outflow pipe line 19. This establishes circular connection of the lower part of hot water storage tank 3, heat exchanger 11, and the upper part of hot water storage tank 3 in this sequence by inflow pipe line 18 and hot water outflow pipe line 19 to form a water circuit. Circulating pump 8 for pressure-feeding water in the lower part of hot water storage tank 3 to heat exchanger 11 is disposed in inflow pipe line 18 inside hot water storage unit 4.

In the heating operation for heating water inside hot water storage tank 3, water stored in the lower part of hot water storage tank 3 runs through inflow pipe line 18 and enters heat exchanger 11, and is heated by exchanging heat with the refrigerant to generate high-temperature hot water. Generated hot water runs through hot water outflow pipe line 19 and enters the upper part of hot water storage tank 3.

Water temperature sensor 20a for detecting a temperature of hot water heated by heating device 10 is disposed in hot water outflow pipe line 19 inside heating device 10. Refrigerant temperature sensor 20b is disposed in the refrigerant pipe between compressor 5 and heat exchanger 11. Ambient air temperature sensor 21 for measuring an ambient air temperature is disposed inside heating device 10. Ambient temperature sensor 21 is preferably disposed near evaporator 7 on the windward side of air entering evaporator 7.

Water quality regulating unit 40 is disposed in inflow pipe line 18. Water quality regulating unit 40 includes water quality regulator 23 that feeds water after reforming inflow water quality so as to inhibit the generation of scale, and drainage 26b with drain valve 26a. Water quality regulating unit 40 is connected to inflow pipe line 18 by connectors 47a and 47b. For example, a union joint or threaded joint can be used for connectors 47a and 47b. By connecting connectors 47a and 47b with inflow pipe line 18, water quality regulating unit 40 is detachably configured with inflow pipe line 18. This enables to connect a pipe other than water quality regulating unit 40 between connectors 47a and 47b. Accordingly, heating device 10 and hot water storage unit 4 can be used commonly for both cases of installing and not installing water quality regulating unit 40.

Water quality regulator 23 is disposed in inflow pipe line 18 between circulating pump 8 and heat exchanger 11. Water quality regulator 23 includes a casing in which scale inhibitor 22 is filled. Water quality regulator 23 has a function to reform water quality so as to inhibit the generation of scale by dissolving scale inhibitor 22 in inflow water, and feed it out.

Water quality regulator 23 in this exemplary embodiment has inlet 23a in the vertical downward direction and outlet 23b in the vertical upward direction of the casing (Fig. 2). Water enters through inlet 23 to water quality regulator 23, and exits through outlet 23b. In other words, water quality regulator 23 itself constitutes inflow pipe line 18. Water quality regulator 23 is connected to inflow pipe line 18 at inlet 23a and outlet 23b. In the exemplary embodiment, water quality regulator 23 and inflow pipe line 18 are connected by inserting a pair of pipes constituting inflow pipe line 18 into inlet 23a and outlet 23b, respectively. In other words, water quality regulator 23 is detachably configured with inflow pipe line 18.

A sealing material, such as an O ring, is preferably provided between inflow pipe line 18, inlet 23a, and outlet 23b. For example, a union joint or threaded joint may be used for inlet 23a and outlet 23b.

Water quality regulator 23 in the exemplary embodiment is configured by filling scale inhibitor 22 inside the casing made of PPS (poly phenylene sulfide) resin. The use of PPS resin for the casing improves the pressure resistance.

Scale inhibitor 22 suppresses the growth of crystal, such as calcium carbonate (component of scale), contained in water when it is dissolved in water. This suppresses precipitation of scale. As scale inhibitor 22, particles mainly composed of polyphosphate can be used. Typical polyphosphate includes sodium tripolyphosphate and sodium hexmetaphosphate. However, other types of polyphosphate may be used. Still more, a substance mainly composed of low polymer, such as phosphonate and carboxylate polyelectrolyte, may also be used.

In water quality regulator 23 in the exemplary embodiment, its inlet 23a is disposed in the vertical downward direction and its outlet 23b is disposed in the vertical upward direction of the casing. This makes water run in the casing of water quality regulator 23, in which scale inhibitor 22 is filled, in a direction from the bottom to top. Comparing with cases of running water in an opposite direction or in other directions, water running inside water quality regulator 23 spreads over entire water quality regulator 23 in this direction. Accordingly, solubility of scale inhibitor 22 (concentration of scale inhibitor 22 contained in water per unit flow rate) dissolved in water can be stabilized.

Shutoff valve (first shutoff valve) 25a is disposed in inflow pipe line 18 at the upstream side of water quality regulator 23. Shutoff valve (second shutoff valve) 25b is also disposed in inflow pipe line 18 at the downstream side of water quality regulator 23. In the exemplary embodiment, shutoff valve 25a is disposed in inflow pipe line 18 at the upstream side of connector 47a. Shutoff valve 25b is disposed in inflow pipe line 18 at the downstream side of connector 47b. Shutoff valve 25a and shutoff valve 25b have a function to close and open a passage of inflow pipe line 18. Opening and closing of shutoff valves 25a and 25b may be either manually operated by an operator or automatically operated by controller 70.

Drainage 26b with drain valve 26a is disposed in inflow pipe line 18 between shutoff valve 25a and inlet 23a. In other words, drainage 26b is disposed inside water quality regulating unit 40. Drain valve 26a has a function to open and close a passage of drainage 26b. Opening and closing of drain valve 26a may be either manually operated by an operator or automatically operated by controller 70.

Drain valve 26a is disposed in the vertical downward direction of water quality regulator 23. This improves drainage performance when water is discharged by closing shutoff valves 25a and 25b, and opening drain valve 26a. In addition, an end of drainage 26b faces vertically downward relative to the horizontal direction. This enables to suppress an operator from getting wet at discharging water through drainage 26b.

Auxiliary heater 60 for heating water inside inflow pipe line 18 is provided in inflow pipe line 18 at the upstream side of water quality regulator 23. For example, an electric heater can be used as auxiliary heater 60. By heating water inside inflow pipe line 18 with auxiliary heater 60, freezing of water in inflow pipe line 18, in particular freezing of water retained in water quality regulator 23, can be prevented. From this viewpoint, auxiliary heater 60 is preferably provided near water quality regulator 23. In the exemplary embodiment, auxiliary heater 60 is provided in inflow pipe line 18 inside water quality regulating unit 40 closer to water quality regulator 23 than drainage 26b. Auxiliary heater 60 may also be provided directly in contact with water quality regulator 23.

The operation and effect of hot water supply apparatus 50 as configured above is described below.

First is described the heating operation for heating water inside hot water storage tank 3 to generate hot water.

In the heating operation, controller 70 controls the operations of compressor 5, pressure reducer 6, and circulating pump 8 to generate hot water.

During the heating operation, shutoff valves 25a and 25b are opened and drain valve 26a is closed.

In heating device 10, the refrigerant enters compressor 5, is compressed until its pressure exceeds the critical pressure, and is discharged from compressor 5. High-temperature and high-pressure refrigerant discharged from compressor 5 enters heat exchanger 11. In hot water storage unit 4, circulating pump 8 is operated to feed water from the lower part of hot water storage tank 3 through inflow pipe line 18 to heat exchanger 11.

The refrigerant entering heat exchanger 11 releases heat to water entering heat exchanger 11 through inflow pipe line 18, and then exits from heat exchanger 11. Pressure reducer 6 reduces a pressure of the refrigerant exiting from heat exchanger 11. After a portion or all of the refrigerant is liquefied, the refrigerant enters evaporator 7. The refrigerant entering evaporator 7 absorbs heat from air and evaporates, and then enters compressor 5 again.

Water entering heat exchanger 11 absorbs heat from high-temperature and high-pressure refrigerant and becomes hot water. The hot water is discharged from heat exchanger 11, runs through hot water outflow pipe line 19, and enters inside hot water storage tank 3 from the upper part of hot water storage tank 3. By heat exchange between the refrigerant and water in heat exchanger 11, high-temperature hot water is generated. In the exemplary embodiment, carbon dioxide is used as the refrigerant, and thus water can be heated to high temperature (e.g., 85 degrees Celsius).

In the heating operation, controller 70 controls the number of revolutions of circulating pump 8 in order that a temperature of hot water (heating temperature) detected by water temperature sensor 20a achieves a predetermined temperature. Controller 70 also controls compressor 5 and pressure reducer 6 based on a refrigerant temperature detected by refrigerant temperature sensor 20b and an ambient temperature detected by ambient temperature sensor 21.

Water fed from the lower part of hot water storage tank 3 by circulating pump 3 passes through water quality regulator 23 disposed in inflow pipe line 18. Here, scale inhibitor 22 filled in water quality regulator 23 dissolves in water. Accordingly, water with dissolved scale inhibitor 22 enters heat exchanger 11.

A constituent, such as calcium carbonate, in water has a property to crystallize and precipitate when water is heated to a high temperature. Accordingly, by dissolving scale inhibitor 22 in water entering heat exchanger 11, the growth of crystal, typically of calcium carbonate, can be suppressed to inhibit precipitation of scale in heat exchanger 11 and hot water outflow pipe line 19 where high-temperature hot water passes through.

Still more, water quality regulator 23 in the exemplary embodiment is configured to make water run in a single direction from the lower part to upper part inside the casing filled with scale inhibitor 22. This enables to spread water over entire water quality regulator 23. Accordingly, a solubility of scale inhibitor 22 flowing out of water quality regulator 23 can be stabilized.

A volume of scale inhibitor 22 filled in water quality regulator 23 gradually reduces as it dissolves in water. As the volume decreases, solubility of scale inhibitor 22 in water also gradually decreases, and thus an effect of suppressing precipitation of scale degrades. Accordingly, before losing an effect of suppressing precipitation of scale, water quality regulator 23 is replaced. Alternatively, maintenance, such as refilling of scale inhibitor 22, needs to be implemented. Maintenance is preferably implemented after detaching water quality regulator 23 in view of workability.

A water pressure due to a difference in the level between hot water storage tank 3 and water quality regulator 23 is applied to water quality regulator 23 after the heating operation. Therefore, if water quality regulator 23 is removed in the state the water pressure is applied to, hot water stored in hot water storage tank 3 runs toward inflow pipe line 18 opened to air, and is discharged. In particular, if hot water is full in hot water storage tank 3, hot water flowing out from the lower part of hot water storage tank 3 is discharged from inflow pipe line 18 opened to air. This makes maintenance more difficult.

In hot water supply apparatus 50 in the exemplary embodiment, shutoff valves 25a and 25b are disposed at the upstream side and downstream side of water quality regulator 23, respectively. Accordingly, a passage of inflow pipe line 18 can be closed by shutoff valves 25a and 25b. Therefore, if water quality regulator 23 is removed after closing inflow pipe line 18 by shutoff valves 25a and 25b, only water retained in inflow pipe line 18 between shutoff valves 25a and 25b is discharged. In other words, water circulating inside hot water supply apparatus 50, such as hot water in hot water storage tank 3, will not be discharged. Since shutoff valves 25a and 25b are disposed at the upstream side and downstream side of water quality regulator 23, an operator can efficiently provide maintenance of water quality regulator 23 in a short time without the need of draining a large volume of hot water inside hot water supply apparatus 50.

Still more, hot water supply apparatus 50 in the exemplary embodiment is provided with drainage 6b with drain valve 26a in inflow pipe line 18 between shutoff valve 25a and inlet 23a. By opening drain valve 26a after closing shutoff valves 25a and 25b, water retained between shutoff valves 25a and 25b is discharged through drainage 26b. As described above, a water pressure due to the difference in level between hot water storage tank 3 and water quality regulator 23 is applied to water quality regulator 23. Therefore, a pressure inside inflow pipe line 18 between shutoff valves 25a and 25b can be reduced to an atmospheric pressure if an operator opens drain valve 26a to drain water before removing water quality regulator 23.

This prevents splashing of water due to water pressure at removing water quality regulator 23. Maintenance of water quality regulator 23 can thus be efficiently provided in a short time. Since drainage 26b is provided below water quality regulator 23, drainage performance can be improved and also splashing of hot water to an operator at discharging water can be prevented. Accordingly, maintenance capability can be improved.

In the exemplary embodiment, water quality regulating unit 40 can be easily removed without the need of draining a large amount of water in hot water supply apparatus by closing shutoff valves 25a and 25b and disconnecting connectors 47a and 47b from inflow pipe line 18.

Still more, controller 70 executes the freezing preventive operation by activating auxiliary heater 60 to heat water entering water quality regulator 23 under a predetermined freezing preventive condition. In this case, controller 70 may activate circulating pump 8.

More specifically, controller 70 activates auxiliary heater 60 and also circulating pump 8, determining that the freezing preventive condition is applicable, when a temperature of water in inflow pipe line 18 is a predetermined temperature (e.g., 5 deg) or below. Then, hot water heated by auxiliary heater 60 enters water quality regulator 23.

The temperature of water in inflow pipe line 18 can be detected by providing a temperature sensor at any position in inflow pipe line 18. A temperature detected by aforementioned water temperature sensor 20a may be used as a temperature of water in the water circuit, i.e., temperature of water in inflow pipe line 18, to determine whether the freezing preventive condition is applicable.

During the freezing preventive operation, controller 70 controls auxiliary heater 60 to extend a heating time or increase a heating amount per unit time when a temperature of water in the water circuit is relatively low. When an ambient temperature is relatively low, a larger amount of heat is needed to prevent freezing of water. The above control thus reliably prevents freezing of water in water quality regulator 23.

Controller 70 may activate auxiliary heater 60 and also the circulating pump, determining that the freezing preventive condition is applicable, when the ambient temperature is a predetermined temperature (e.g., 3 deg) or below. In this case, controller 70 may control auxiliary heater 60 to extend the heating time or increase a heating amount per unit time when the ambient temperature is relatively low during the freezing preventive operation.

A water temperature in the water circuit and ambient temperature may be combined as required and used for changing determination of starting the freezing preventive operation and control method during the freezing preventive operation. In addition, starting of the freezing preventive operation may be determined and a control method during the freezing preventive operation may be changed based on at least the length of time that a temperature of water in the water circuit is not greater than the predetermined temperature or higher than the predetermined temperature up to a certain extent (e.g., 3 deg), or the length of time that the ambient temperature is not greater than the predetermined temperature or lower than the predetermined temperature up to a certain extent (e.g., 3 deg). In other words, controller 70 controls auxiliary heater 60 to extend the heating time longer or increase the heating amount per unit time more during the freezing preventive operation when the above lengths of time are longer.

Controller 70 ends the freezing preventive operation when the water temperature in the water circuit becomes higher than the predetermined temperature or the ambient temperature becomes higher than the predetermined temperature.

In the exemplary embodiment, a heat pump unit is used as heating device 10. However, a gas burner, electric heater, and other types of heating device 10 may be used instead of the heat pump unit.

Still more, in the above description, drainage 26b is provided in inflow pipe line 18 between shutoff valve 25a and inlet 23a. Drainage 26 may also be provided in inflow pipe line 18 between outlet 23b and shutoff valve 25b below water quality regulator 23. This enables to smoothly drain water also retained between outlet 23b and shutoff valve 25b.

The present invention is not limited to above exemplary embodiments. For example, water quality regulating unit 40 and shutoff valves 25a and 25b may be disposed in water supply pipe 12. In this case, water quality regulating unit 40 and shutoff valves 25a and 25b are disposed at the downstream side of pressure-reducing valve 13. This makes water whose pressure is reduced by pressure-reducing valve 13 enters water quality regulator 23. This eliminates the need of excessively increasing the pressure resistance of the casing of water quality regulator 23, enabling to reduce the cost. By providing water quality regulator 23 in water supply pipe 12, scale inhibitor 22 can be dissolved in water entering hot water storage tank 3. Accordingly, water entering heat exchanger 11 contains scale inhibitor 22, and thus precipitation of scale is suppressed as described above.

Still more, water quality regulator 23 and shutoff valves 25a and 25b are preferably disposed at the upstream side of a branch point of water supply pipe 12 and bypass pipe 16 relative to the water running direction in water supply pipe 12. This makes water in which scale inhibitor 22 is dissolved also run to bypass pipe 16, and thus solubility of the scale inhibitor in hot water supplied to hot water supply terminal 17 can be retained above a certain level.

If water quality regulating unit 40 is provided in water supply pipe 12, auxiliary heater 60 is preferably provided at the downstream side of pressure-reducing valve 13 and at the upstream side of water quality regulator 23. In this case, controller 70 can change starting of the freezing preventive operation and a control method during the freezing preventive operation, using at least water temperature in water supply pipe 12, ambient temperature, or the length of time.

As described above, a passage is first closed by shutoff valves 25a and 25b on replacing water quality regulator 23 or providing maintenance, such as refilling of scale inhibitor 22. Then, drain valve 26a of drainage 26b is opened to discharge water retained between shutoff valve 25a and shutoff valve 25b. Finally, water quality regulator 23 detachably configured with water inlet pipe 18 is removed. This enables to drain just a portion of water retained between shutoff valve 25a and shutoff valve 25b, and eliminate the need of draining water in the entire hot water supply apparatus. Accordingly, maintenance is efficiently applicable to water quality regulator 23.

### (SECOND EXEMPLARY EMBODIMENT)

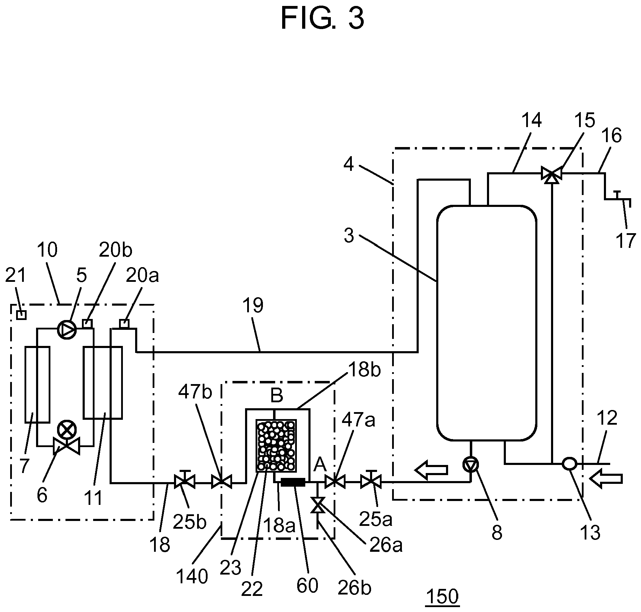

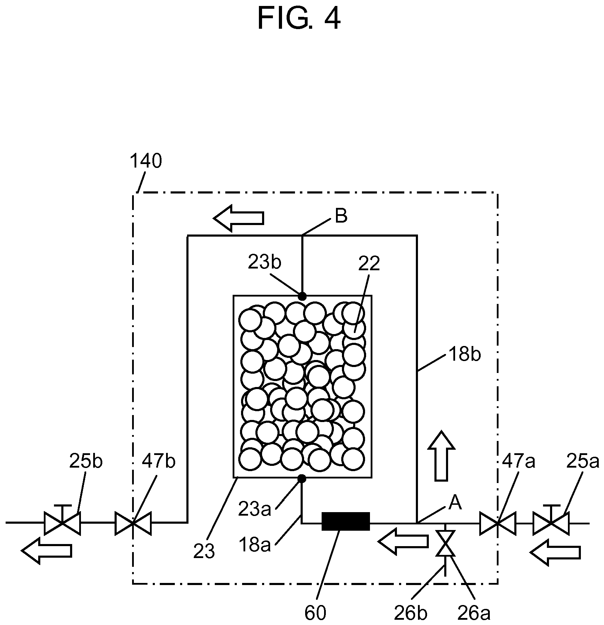

Fig. 3 is a schematic diagram of hot water supply apparatus 150 in the second exemplary embodiment present invention. Fig. 4 is a schematic diagram of water quality regulating unit 140 of hot water supply apparatus 150. In the exemplary embodiment, components same as those in the first exemplary embodiment are given the same reference marks to omit their duplicate description.

As shown in Figs. 3 and 4, inflow pipe line 18 in hot water supply apparatus 150 in the exemplary embodiment includes main passage 18a where water quality regulator 23 is disposed, and sub passage 18b bypassing water quality regulator 23.

Also in the exemplary embodiment, drainage 26b with drain valve 26a is disposed at the downstream side of shutoff valve 25a and the upstream side of branch point A of main passage 18a and sub passage 18b, relative to the direction of water running in inflow pipe line 18. Drainage 26b is disposed at the downstream side of connector 47a.

Auxiliary heater 60 is provided at the upstream side of water quality regulator 23 and the downstream side of branch point A of main passage 18a and sub passage 18b.

Quantity of water entering water quality regulator 23 is determined by setting flow resistance of main passage 18a and sub passage 18b, so as to prevent excessive concentration of the scale inhibitor at joint point B of main passage 18a and sub passage 18b. More specifically, for example, the flow resistance is set such that a quantity of water running in sub passage 18b is about 2.5% of a quantity of water running in main passage 18a.

When the ambient temperature is low, a temperature of water entering water quality regulator 23 likely decreases. This tends to cause freezing of water inside sub passage 18b and water quality regulator 23. This also means that scale inhibitor 22 cannot be sufficiently dissolved because higher the water temperature is, larger the amount of scale inhibitor 22 dissolved in water, which is a solvent.

To solve this disadvantage, auxiliary heater 60 is provided in main passage 18a at the upstream of water quality regulator 23 in the exemplary embodiment. This can prevent freezing of water in water quality regulator 23, even if the ambient temperature or water temperature in the water circuit is low, by executing the freezing preventive operation. A temperature of water entering water quality regulator 23 can also be increased to enable sufficient amount of scale inhibitor 22 to be dissolved in water.

Hot water supply apparatus 150 in the exemplary embodiment can also execute the freezing preventive operation in the same way as that described in the first exemplary embodiment.

The operation and effect of hot water supply apparatus 150 as configured above are described below.

In the heating operation, water pressure-fed by circulating pump 8 and running in inflow pipe line 18 is branched to main passage 18a and sub passage 18b as shown in Fig. 4. Water running in main passage 18a enters water quality regulator 23. In water quality regulator 23, scale inhibitor 22 dissolves in water to achieve water that unlikely generates scale. Water exiting from water quality regulator 23 joins water that has passed through sub passage 18b.

Here, solubility of scale inhibitor 22 in water entering heat exchanger 11 can be adjusted by adjusting a split flow ratio of water running in main passage 18a and sub passage 18b. Accordingly, solubility of scale inhibitor 22 is appropriately adjusted to suppress wasteful consumption of scale inhibitor 22, in addition to improvement of improved maintenance capability of water quality regulator 23.

In the exemplary embodiment, water quality regulating unit 140 and shutoff valves 25a and 25b may be disposed in water supply pipe 12. In this case, auxiliary heater 60 is provided in main passage 18a (main passage of water supply pipe 12) at the upstream side of water quality regulator 23.

As described above, hot water supply apparatus 50 in the exemplary embodiment includes hot water storage tank 3 for storing hot water, water supply pipe 12 for supplying water to the lower part of hot water storage tank 3, inflow pipe line 18 for feeding water from the lower part of hot water storage tank 3, heating device 10 for heating water fed through inflow pipe line 18, and hot water outflow pipe line 19 for feeding hot water heated by heating device 10 to the upper part of hot water storage tank 3. Hot water supply apparatus 50 further includes water quality regulator 23 for reforming water quality so as to inhibit the generation of scale disposed in at least inflow pipe line 18 or water supply pipe 12, and auxiliary heater 60 for heating water entering water quality regulator 23 provided at the upstream side of water quality regulator 23.

This configuration enables auxiliary heater 60 to heat hot water entering water quality regulator 23. As a result, hot water supply apparatus 50 that can prevent freezing of water in water quality regulator 23 can be provided.

Hot water storage tank 3 and heating device 10 are circularly connected by inflow pipe line 18 and hot water outflow pipe line 19 to form a water circuit. Controller 7 for controlling auxiliary heater 60 may also be provided. Controller 70 may be configured to activate auxiliary heater 60 when water in the water circuit is at a first predetermined temperature or below, or water in water supply pipe 12 is at a second predetermined temperature or below. In this configuration, auxiliary heater 60 is controlled depending on a temperature of water in a portion that may freeze in water quality regulator 23. Accordingly, freezing of water can be prevented while suppressing power consumed by auxiliary heater 60.

Still more, hot water storage tank 3 and heating device 10 are circularly connected by inflow pipe line 18 and hot water outflow pipe line 19 to form a water circuit. Controller 70 for controlling auxiliary heater 60 may also be provided. Controller 70 may be configured to activate auxiliary heater 60 when the ambient temperature is a third predetermined temperature or below

Since auxiliary heater 60 is controlled depending on a decrease of ambient temperature, which is a major cause of freezing of water in hot water supply apparatus 50, freezing of water can be prevented while suppressing power consumption by auxiliary heater 60.

Furthermore, controller 70 may be configured to extend heating time or increase a heating amount per unit time by auxiliary heater 60 if at least the water temperature in the water circuit, water temperature in water supply pipe 12, or ambient temperature is relatively low.

This configuration enables to give a larger amount of heat to water under the condition that a larger amount of heat is needed for preventing freezing. Accordingly, freezing of water can be reliably prevented while suppressing power consumption by auxiliary heater 60.

As described above, the present invention demonstrates a significant effect of preventing freezing of water inside the water quality regulator, and thus is effectively applicable to home-use and industrial-use hot water supply apparatuses.

## Claims

1. A hot water supply apparatus (50) comprising:
a hot water storage tank (3) for storing hot water;
a water supply pipe (12) for supplying water to a lower part of the hot water storage tank (3);
an inflow pipe line (18) for feeding the water from the lower part of the hot water storage tank (3);
a heating device (10) for heating the water fed through the inflow pipe line (18);
a hot water outflow pipe line (19) for feeding hot water heated by the heating device (10) to an upper part of the hot water storage tank (3);
a water quality regulating unit (40) comprising a water quality regulator (23) filled with a scale inhibitor (22) and a drainage (26b) with a drain valve (26a), the water quality regulator (23) being detachably connected to at least one of the inflow pipe line (18) and the water supply pipe (12) for reforming a water quality of inflow water by a first connector (47a) positioned upstream an inlet (23a) of the water quality regulator (23) and a second connector (47b) positioned downstream an outlet (23b) of the water quality regulator (23) so as to inhibit generation of scale; wherein a first shutoff valve (25a) is provided upstream the first connector (47a) and a second shutoff valve (25b) is provided downstream the second connector (47a) for closing respective passages to and from the water quality regulating unit (40), and
an auxiliary heater (60) provided at an upstream side of the water quality regulator (23) for heating water entering the water quality regulator (23).

2. The hot water supply apparatus (50) of claim 1,
wherein
the hot water storage tank (3) and the heating device (10) are circularly connected by the inflow pipe line (18) and the hot water outflow pipe line (19) to form a water circuit,
a controller (70) for controlling the auxiliary heater (60) is further provided, and
the controller (70) is configured to activate the auxiliary heater (60) when one of:
a temperature of water in the water circuit is not greater than a first predetermined temperature, and
a temperature of water in the water supply pipe (12) is not greater than a second predetermined temperature.

3. The hot water supply apparatus (50) of claim 1,
wherein
the hot water storage tank (3) and the heating device (10) are circularly connected by the inflow pipe line (18) and the hot water outflow pipe line (19) to form a water circuit,
a controller (70) for controlling the auxiliary heater (60) is further provided, and
the controller (70) is configured to activate the auxiliary heater (60) when an ambient temperature is not greater than a third predetermined temperature.

4. The hot water supply apparatus (50) of one of claims 2 and 3,
wherein
when at least one of a temperature of water in the water circuit, a temperature of water in the water supply pipe (12), and an ambient temperature is relatively low, the controller (70) is configured to one of:
extend a heating time by the auxiliary heater (60), and
increase a heating amount per unit time by the auxiliary heater (60).

## Patentansprüche

1. Vorrichtung (50) zum Bereitstellen von Warmwasser, enthaltend:
einen Warmwasserspeichertank (3) zum Speichern von warmem Wasser;
ein Wasserzuführungsrohr (12) zum Zuführen von Wasser zu einem unteren Teil eines Warmwasserspeichertanks (3);
eine Zuflussrohrleitung (18), um das Wasser vom unteren Teil des Warmwasserspeichertanks (3) aus einzuspeisen;
eine Heizvorrichtung (10), um das durch die Zuflussrohrleitung (18) eingespeiste Wasser zu erhitzen;
eine Warmwasserabflussrohrleitung (19), um das von der Heizvorrichtung (10) erhitzte Wasser in einen oberen Teil des Warmwasserspeichertanks (3) einzuspeisen;
eine Wasserqualitätsregeleinheit (40), die einen mit einem Kesselsteininhibitor (22) gefüllten Wasserqualitätsregler (23) und einen Ablauf (26b) mit einem Ablaufventil (26a) enthält, wobei der Wasserqualitätsregler (23) abnehmbar mit der Zuflussrohrleitung (18) und/oder dem Wasserzuführungsrohr (12) über einen ersten Verbinder (47a), der stromaufwärts eines Einlasses (23a) des Wasserqualitätsreglers (23) gelegen ist, und einen zweiten Verbinder (47b), der stromabwärts eines Auslasses (23b) des Wasserqualitätsreglers (23) gelegen ist, verbunden ist, um eine Wasserqualität von Zuflusswasser zu verbessern, um somit die Bildung von Kesselstein zu hemmen; wobei ein erstes Absperrventil (25a) stromaufwärts des ersten Verbinders (47a) vorgesehen ist und ein zweites Absperrventil (25b) stromabwärts eines zweiten Verbinders (47a) vorgesehen ist, um jeweilige Durchlässe zu und von der Wasserqualitätsregeleinheit (40) zu schließen, und
eine Zusatzheizung (60), die an einer stromaufwärts gelegenen Seite des Wasserqualitätsreglers (23) vorgesehen ist, um in den Wasserqualitätsregler (23) eintretendes Wasser zu erhitzen.

2. Vorrichtung (50) zum Bereitstellen von Warmwasser nach Anspruch 1,
wobei
der Warmwasserspeichertank (3) und die Heizvorrichtung (10) umlaufend über die Zuflussrohrleitung (18) und die Warmwasserabflussrohrleitung (19) verbunden sind, um einen Wasserkreislauf zu bilden,
ferner eine Steuervorrichtung (70) vorgesehen ist, um die Zusatzheizung (60) zu steuern, und
die Steuervorrichtung (70) dazu ausgelegt ist, die Zusatzheizung (60) einzuschalten, wenn:
eine Temperatur von Wasser im Wasserkreislauf nicht größer ist als eine erste vorbestimmte Temperatur, oder
eine Temperatur von Wasser im Wasserzuführungsrohr (12) nicht größer ist als eine zweite vorbestimmte Temperatur.

3. Vorrichtung (50) zum Bereitstellen von Warmwasser nach Anspruch 1,
wobei
der Warmwasserspeichertank (3) und die Heizvorrichtung (10) umlaufend über die die Zuflussrohrleitung (18) und die Warmwasserabflussrohrleitung (19) verbunden sind um einen Wasserkreislauf zu bilden,
ferner eine Steuervorrichtung (70) vorgesehen ist, um die Zusatzheizung (60) zu steuern, und
die Steuervorrichtung (70) dazu ausgelegt ist, die Zusatzheizung (60) einzuschalten, wenn eine Umgebungstemperatur nicht größer ist als eine dritte vorbestimmte Temperatur.

4. Vorrichtung (50) zum Bereitstellen von Warmwasser nach einem der Ansprüche 2 oder 3, wobei
dann, wenn eine Temperatur von Wasser im Wasserkreislauf und/oder eine Temperatur von Wasser im Wasserzuführungsrohr (12) und/oder eine Umgebungstemperatur vergleichsweise gering ist, die Steuervorrichtung (70) dazu ausgelegt ist:
eine Aufheizungsdauer durch die Zusatzheizung (60) auszudehnen, oder
einen Aufheizungsgrad pro Zeiteinheit durch die Zusatzheizung (60) zu erhöhen.

## Revendications

1. Appareil d'alimentation en eau chaude (50) comprenant :
un réservoir de stockage d'eau chaude (3) pour stocker de l'eau chaude ;
un tuyau d'alimentation en eau (12) destiné à fournir de l'eau à une partie inférieure du réservoir de stockage d'eau chaude (3) ;
une conduite de tuyau d'entrée (18) destinée à introduire l'eau provenant de la partie inférieure du réservoir de stockage d'eau chaude (3) ;
un dispositif de chauffage (10) pour chauffer l'eau introduite par l'intermédiaire de la conduite de tuyau d'entrée (18) ;
une conduite de tuyau de sortie d'eau chaude (19) destinée à introduire l'eau chaude chauffée par le dispositif de chauffage (10) dans une partie supérieure du réservoir de stockage d'eau chaude (3) ;
une unité de régulation de la qualité de l'eau (40) comprenant un régulateur de qualité d'eau (23) rempli par un inhibiteur de tartre (22) et une évacuation (26b) avec une vanne d'évacuation (26a), le régulateur de qualité d'eau (23) étant relié de manière amovible à au moins l'un de la conduite de tuyau d'entrée (18) et du tuyau d'alimentation en eau (12) pour reformer une qualité d'eau de l'eau d'entrée par un premier raccord (47a) positionné en amont d'une entrée (23a) du régulateur de qualité d'eau (23) et un second raccord (47b) positionné en aval d'une sortie (23b) du régulateur de qualité d'eau (23) de façon à inhiber la génération de tartre ; où une première vanne d'arrêt (25a) est disposée en amont du premier raccord (47a) et une seconde vanne d'arrêt (25b) est disposée en aval du second raccord (47a) pour fermer des passages respectifs vers et à partir de l'unité de régulation de la qualité de l'eau (40), et
un dispositif de chauffage auxiliaire (60) disposé au niveau d'un côté amont du régulateur de qualité d'eau (23) pour chauffer l'eau entrant dans le régulateur de qualité d'eau (23).

2. Appareil d'alimentation en eau chaude (50) de la revendication 1,
dans lequel
le réservoir de stockage d'eau chaude (3) et le dispositif de chauffage (10) sont reliés de manière circulaire par la conduite de tuyau d'entrée (18) et la conduite de tuyau de sortie d'eau chaude (19) pour former un circuit d'eau,
un dispositif de commande (70) destiné à commander le dispositif de chauffage auxiliaire (60) est en outre prévu, et
le dispositif de commande (70) est configuré pour activer le dispositif de chauffage auxiliaire (60) lorsque :
soit une température d'eau dans le circuit d'eau n'est pas supérieure à une première température prédéterminée,
soit une température d'eau dans le tuyau d'alimentation en eau (12) n'est pas supérieure à une deuxième température prédéterminée.

3. Appareil d'alimentation en eau chaude (50) de la revendication 1,
dans lequel
le réservoir de stockage d'eau chaude (3) et le dispositif de chauffage (10) sont reliés de manière circulaire par la conduite de tuyau d'entrée (18) et la conduite de tuyau de sortie d'eau chaude (19) pour former un circuit d'eau,
un dispositif de commande (70) destiné à commander le dispositif de chauffage auxiliaire (60) est en outre prévu, et
le dispositif de commande (70) est configuré pour activer le dispositif de chauffage auxiliaire (60) lorsqu'une température ambiante n'est pas supérieure à une troisième température prédéterminée.

4. Appareil d'alimentation en eau chaude (50) de l'une des revendications 2
et 3,
dans lequel
lorsqu'au moins l'une d'une température d'eau dans le circuit d'eau, d'une température d'eau dans le tuyau d'alimentation en eau (12), et d'une température ambiante est relativement faible, le dispositif de commande (70) est configuré pour :
soit rallonger un temps de chauffage par le dispositif de chauffage auxiliaire (60),
soit augmenter une quantité de chauffage par unité de temps par le dispositif de chauffage auxiliaire (60).
